# EUROPEAN PATENT SPECIFICATION

(11) **EP 3 382 178 B1**
(45) Date of publication and mention of the grant of the patent: **16.03.2022**
(21) Application number: 18163754.7
(22) Date of filing: 23.03.2018
(51) Int. Cl.: F02B 77/13

(54) **VEHICLE WITH AN ENGINE IN AN ENGINE COMPARTMENT**
FAHRZEUG MIT EINEM MOTOR IN EINEM MOTORRAUM
VÉHICULE AVEC UN MOTEUR DANS UN COMPARTIMENT MOTEUR

(30) Priority: 27.03.2017 JP 2017060852
(43) Date of publication of application: 03.10.2018
(73) Proprietor: Toyota Jidosha Kabushiki Kaisha, Aichi-Ken 471-8571 (JP)
(72) Inventor: ITOH, Taro, Toyota-shi, Aichi-Ken, 471-8571 (JP)
(74) Representative: Cabinet Beau de Loménie

(56) References cited:
- EP-A1- 0 252 178
- EP-A1- 0 921 291
- CA-A- 697 747
- DE-A1- 2 913 648
- DE-A1- 3 345 171
- DE-A1-102004 017 362
- FR-A1- 2 407 351
- US-A- 4 137 888
- US-A- 4 222 360

## Description

### BACKGROUND

The present disclosure relates to a vehicle with an internal combustion engine.

Japanese Laid-Open Patent Publication No. 63-25322 (see also official language family memeber EP 0 252 178 A1) discloses an internal combustion engine having an engine body and a capsule enclosing the entire engine body. The capsule is attached to the engine body with connecting members. The capsule reduces the noise transmitted from the engine body to the outside of the vehicle. Also, auxiliary devices such as the alternator are placed outside the capsule to allow inspection of the auxiliary devices without removing the capsule from the engine body.

Pulleys of the auxiliary devices located outside the capsule are arranged in positions close to the capsule. Thus, when detaching the capsule from the engine body for maintenance or the like, the auxiliary devices need to be temporarily removed to avoid interference with the capsule. Therefore, although the internal combustion engine disclosed in the above publication can reduce the noise from the engine body during operation, it does not improve the maintainability to a satisfactory level. EP 0 921 291 A1 discloses a variant where an engine cover is open to the top and the front, while side walls of the cover are formed by the engine compartment itself. Auxiliaries are arranged at the front side of the engine.

### SUMMARY

In accordance with the present invention, a vehicle according to claim 1 is provided.

### BRIEF DESCRIPTION OF THE DRAWINGS

The disclosure, together with objects and advantages thereof, may best be understood by reference to the following description of the presently preferred embodiments together with the accompanying drawings in which:
Fig. 1 is a plan view schematically showing the configuration of an internal combustion engine according to one embodiment;
Fig. 2 is a perspective view showing the internal combustion engine of Fig. 1 with the cover removed;
Fig. 3 is a perspective view showing the internal combustion engine of Fig. 1 with the cover attached;
Fig. 4 is an exploded perspective view of the cover of Fig. 3;
Fig. 5 is a cross-sectional view of the structure of a securing mechanism for securing the cover and the engine body to each other, showing a state before the cover and the engine body are secured to each other;
Fig. 6 is a cross-sectional view of the structure of the securing mechanism, showing a state in which the cover and the engine body are secured to each other;
Fig. 7 is a plan view of the structure of an internal combustion engine according to a modification; and
Fig. 8 is an exploded perspective view of the cover in the internal combustion engine of Fig. 7.

### DETAILED DESCRIPTION

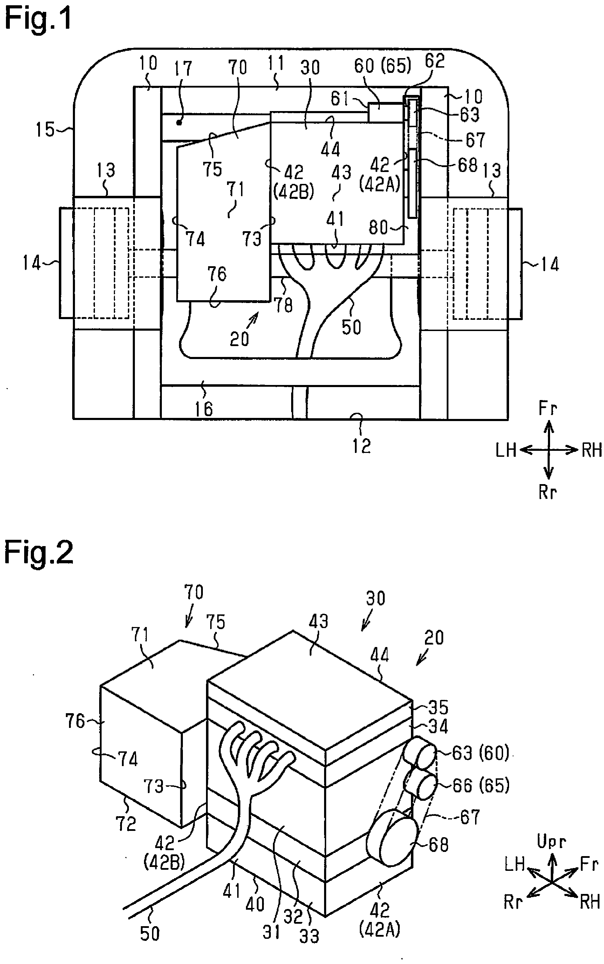

A vehicle according to one embodiment will now be described with reference to Figs. 1 to 6. In Fig. 1 to Fig. 6, the front, the rear, the right in the vehicle width direction when facing the front, the left in the vehicle width direction when facing the front, and the upper side are indicated by arrows Fr, Rr, RH, LH, and Upr, respectively.

As shown in Fig. 1, a pair of side members 10 extending in the vehicle longitudinal direction (vertical direction in Fig. 1) is provided in the front part of the vehicle. A cross member 11 extending in the vehicle width direction (the horizontal direction in Fig. 1) is coupled to the front ends of the side members 10. Further, the rear ends of the side members 10 are connected to a dash panel 12, which extends in the vehicle width direction. A wheel housing 13 is coupled to each side member 10 at the central portion in the vehicle longitudinal direction. The wheel housing 13 extends outward in the vehicle width direction from the upper surface and the side surface of the side member 10 and accommodates a wheel 14. The wheel housing 13 is formed in a curved shape along the outer shape of the wheel 14. An outer panel 15 constituting the ornamental surface of the front part of the vehicle is connected to the wheel housings 13.

A suspension member 16 is arranged under side members 10. The suspension member 16 is formed into a rectangular frame. The suspension member 16 is arranged at a position where its corners face the lower surfaces of the side members 10. The suspension member 16 is supported by the side members 10 by connecting the corners to the side members 10 via mounting members (not shown). In the plan view shown in Fig. 1, the internal combustion engine 20 is arranged inside an engine compartment 17, which is an area surrounded by the side members 10 and the cross member 11 and above the suspension member 16.

As shown in Fig. 2, the engine 20 includes an engine body 30, which includes a cylinder block 31, a crankcase 32 coupled to the lower surface of the cylinder block 31, and an oil pan 33 coupled to the lower surface of the crankcase 32. The engine body 30 also has a cylinder head 34 coupled to the upper surface of the cylinder block 31 and a cylinder head cover 35 coupled to the upper surface of the cylinder head 34. The engine body 30 has a substantially rectangular parallelepiped shape as a whole and has a lower surface 40 facing downward of the vehicle, a rear surface 41 facing the rear of the vehicle, and a pair of side surfaces 42 facing in the vehicle width direction. The engine body 30 also has an upper surface 43 facing upward of the vehicle and a front surface 44 facing the front of the vehicle.

An exhaust passage 50 is coupled to the rear surface 41 of the engine body 30. The exhaust passage 50 branches into a plurality of branches toward the engine body 30, and the ends of the branches are each coupled to the cylinder head 34. As shown in Figs. 1 and 2, the exhaust passage 50 extends downward from the engine body 30, passes under the suspension member 16 and the dash panel 12, and is routed to the rear of the vehicle.

As shown in Figs. 1 and 2, an alternator 60 and a compressor 65, which are auxiliary devices, are attached to the front surface 44 of the engine body 30. The alternator 60 has a main body 61 fixed to the right side in the vehicle width direction of the front surface 44 of the engine body 30, a rotary shaft 62 extending rightward in the vehicle width direction from the main body 61, and a driven pulley 63 coupled to the distal end of the rotary shaft 62. Like the alternator, the compressor 65 has a main body and rotary shaft (neither is shown). As shown in Fig. 2, a driven pulley 66 is coupled to the distal end of the rotary shaft. A timing belt 67 is looped over these driven pulleys 63, 66. A crankshaft pulley 68, which is coupled to a first end of the crankshaft of the engine body 30, is arranged on the right side surface 42A of the engine body 30, which is the right one of the side surfaces 42 in the vehicle width direction. The timing belt 67 is also looped over the crankshaft pulley 68. When the crankshaft pulley 68 rotates integrally with the crankshaft, the driven pulleys 63, 66 also rotate, accordingly. In this manner, the alternator 60 and the compressor 65 are drivingly coupled to engine body 30.

As shown in Figs. 1 and 2, a transmission case 70 is coupled to the left side surface 42B of the engine body 30, which is the left one of the surfaces 42 in the vehicle width direction. The transmission case 70 includes an upper wall 71 and a lower wall 72, which respectively face upward and downward in the vehicle vertical direction, a right wall 73 and a left wall 74, which face away from each other in the vehicle width direction, and a front wall 75 and a rear wall 76, which respectively face forward and rearward of the vehicle. The outer surface of the right wall 73 of the transmission case 70 is coupled to the left side surface 42B of the engine body 30. As shown in Fig. 2, in this state, the right wall 73 of the transmission case 70 is in contact with the cylinder block 31 and the crankcase 32, so that a part of the left side surface 42B of the engine body 30 is covered by the transmission case 70.

As shown in Fig. 1, the right wall 73 of the transmission case 70 extends further toward the front of the vehicle than the left wall 74. This causes the front wall 75 to be inclined to approach the rear of the vehicle toward the left end in the vehicle width direction. Thus, the upper wall 71 and the lower wall 72 of the transmission case 70 each have a trapezoidal shape in a plan view. Further, the rear portion of the transmission case 70 is located closer to the rear of the vehicle than the engine body 30. The transmission case 70 incorporates a transmission. The crankshaft extends from the left side surface 42B of the engine body 30 into the transmission case 70 through the right wall 73 of the transmission case 70. That is, a second end the crankshaft is located inside the transmission case 70. The second end of the crankshaft is connected to the transmission. A drive shaft 78 extends through a part of the transmission case 70 that is rearward of the engine body 30. The drive shaft 78 extends through the transmission case 70, and the wheels accommodated in the wheel housings 13 are coupled to the opposite ends of the drive shaft 78. Rotation of the crankshaft is transmitted to the drive shaft 78 via the transmission accommodated in the transmission case 70. The transmission controls the gear ratio, which is the ratio of the rotational speed of the crankshaft and the rotational speed of the drive shaft 78. The torque of the crankshaft is transmitted to the wheels 14 through the drive shaft 78, so that the vehicle travels.

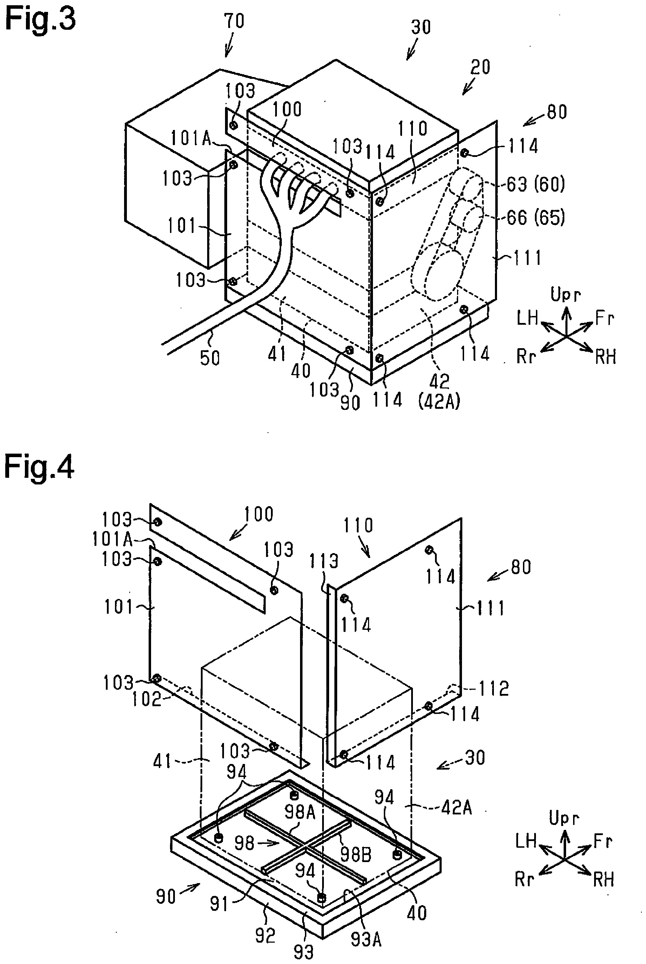

As shown in Fig. 3, the engine 20 also has a cover 80. The cover 80 covers the lower surface 40, the rear surface 41, and the right side surface 42A of the engine body 30.

As shown in Fig. 4, the cover 80 has a bottom cover portion 90 located below the engine body 30. The bottom cover portion 90 includes a rectangular bottom plate portion 91 facing the lower surface 40 of the engine body 30, an upstanding wall portion 92 upstanding from the peripheral edge of the bottom plate portion 91, and an upper wall portion 93 extending a predetermined length inward from the upper end of the upstanding wall portion 92. The bottom plate portion 91 is larger than the lower surface 40 of the engine body 30 and its entire periphery is arranged outside the lower surface 40. The upstanding wall portion 92 is arranged over the entire periphery of the bottom plate portion 91. The upper wall portion 93 extends parallel with the bottom plate portion 91. The bottom cover portion 90 has an opening 93A defined by the periphery of the upper wall portion 93. The opening 93A faces upward and its size is larger than the lower surface 40 of the engine body 30. The bottom plate portion 91 is provided with a plurality of coupling posts 94 extending upward. The coupling posts 94 have a columnar shape. The coupling posts 94 are provided in the inner region of the opening 93A in a plan view of the bottom plate portion 91.

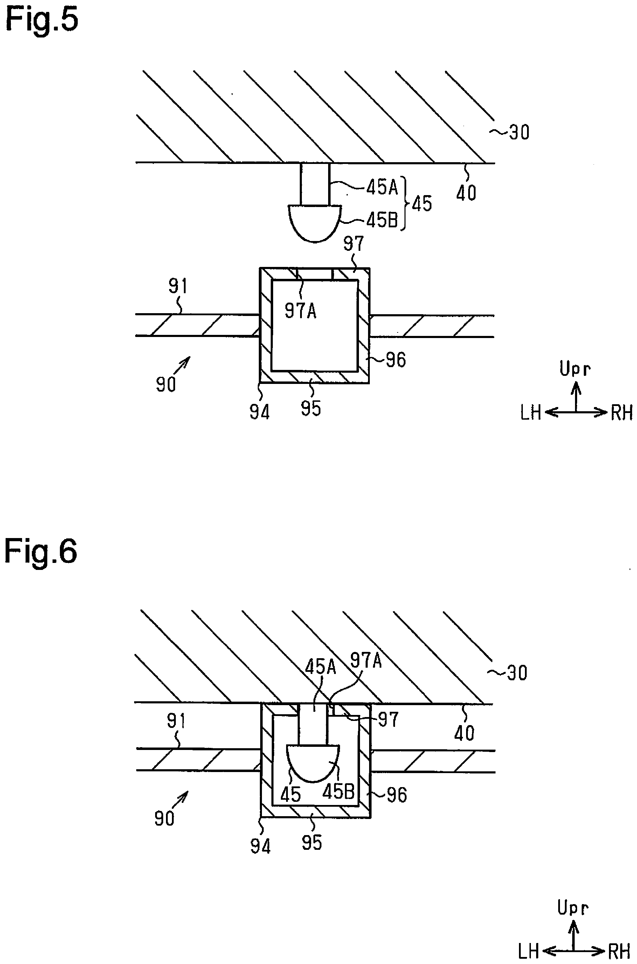

As shown in Fig. 5, each coupling post 94 extends through the bottom plate portion 91. The coupling post 94 is composed of a disk-shaped lower plate 95, a tubular portion 96 upstanding from the periphery of the lower plate 95, and an upper plate 97 coupled to the edge of the tubular portion 96. The upper plate 97 is annular and has a through-hole 97A. In the bottom cover portion 90, the bottom plate portion 91, the upstanding wall portion 92, and the upper wall portion 93 are made of nonwoven fabric, and the coupling posts 94 are made of a material having elasticity such as rubber.

The engine body 30 has securing pieces 45 on the lower surface 40. The securing pieces 45 are arranged at positions corresponding to the coupling posts 94 on the bottom cover portion 90. Each securing piece 45 is composed of a columnar shaft portion 45A projecting downward from the lower surface 40 of the engine body 30 and a head portion 45B coupled to the lower end of the shaft portion 45A. The head portion 45B has a hemispherical shape. The diameter of the head portion 45B is larger than the diameter of the through-hole 97A of the coupling post 94.

As shown in Fig. 6, the bottom cover portion 90 is attached to the engine body 30 by inserting the head portions 45B of the securing pieces 45 into the through-holes 97A of the coupling posts 94. That is, when inserting each securing piece 45 into the coupling post 94, the coupling post 94 is elastically deformed so that the through-hole 97A is expanded, allowing the head portions 45B of the securing piece 45 to be inserted into the coupling post 94. Thereafter, the elastic restoration of the coupling post 94 contracts the through-hole 97A to the original size, securing the head portion 45B to the upper plate 97 and preventing the head portion 45B from coming out of the interior of the coupling post 94. In this manner, each coupling post 94 functions as a securing hole portion, through which the securing piece 45 is inserted, and the securing piece 45 and the coupling post 94 constitute a securing mechanism for attaching the bottom cover portion 90 to the engine body 30. When removing the bottom cover portion 90 from the engine body 30, the bottom cover portion 90 is pulled downward to elastically deform the upper plates 97 and pull out the head portions 45B from the through-holes 97A, so that the securing pieces 45 and the coupling posts 94 are disengaged from each other.

As shown in Fig. 4, the bottom plate portion 91 also has an upward protrusion 98. The protrusion 98 is composed of a first protrusion 98A extending in the vehicle width direction and a second protrusion 98B extending in the vehicle longitudinal direction. The first protrusion 98A and the second protrusion 98B extend to cross each other at their central parts. The protruding height of the protrusion 98 from the bottom plate portion 91 is the same as the protruding height of the coupling posts 94 from the bottom plate portion 91. The protrusion 98 is made of an elastic material such as rubber. With the bottom cover portion 90 attached to the engine body 30 with the securing mechanism, the lower surface 40 of the engine body 30 is in contact with the upper surfaces of the protrusion 98 and the coupling posts 94, so that the engine body 30 is supported by the protrusion 98 and the coupling posts 94. As a result, a gap is created between the engine body 30 and the bottom cover portion 90 by an amount corresponding to the projecting height of the protrusion 98.

As shown in Figs. 3 and 4, the cover 80 also has a rear cover portion 100 located rearward of the engine body 30. The rear cover portion 100 has a rectangular rear plate portion 101 facing the rear surface 41 of the engine body 30 and a rear bent portion 102 extending toward the front of the vehicle from the lower end of the rear plate portion 101. The rear plate portion 101 is larger than the rear surface 41 of the engine body 30, and the opposite end edges in the vehicle width direction of the rear plate portion 101 are located outward of the rear surface 41. Also, in the vertical direction of the vehicle, the upper edge of the rear plate portion 101 is at the same position as the upper edge of the rear surface 41. The rear plate portion 101 has a slot 101A, which has a shape cut out from the left end toward the right end in the vehicle width direction. The slot 101A is formed in a rectangular shape having the longitudinal direction coinciding with the vehicle width direction. The rear plate portion 101 and the rear bent portion 102 are made of nonwoven fabric. Further, the rear plate portion 101 has coupling posts 103. Four of the coupling posts 103 are respectively arranged at the four corners of the rear plate portion 101. Further, the other coupling post 103 of the rear plate portion 101 is located on the opposite side of the opening of the slot 101A to the coupling post 103 in the upper left corner.

The structure of the coupling posts 103 provided on the rear cover portion 100 is the same as the structure of the coupling posts 94 provided on the bottom cover portion 90. The through-holes 97A of the coupling posts 103 on the rear cover portion 100 face the rear surface 41 of the engine body 30. Also, the engine body 30 has securing pieces 45 (not shown) on the rear surface 41. The securing pieces 45 are arranged at positions corresponding to the coupling posts 103 on the rear cover portion 100. The structure of the securing pieces 45 provided on the rear surface 41 of the engine body 30 is the same as the structure of the securing pieces 45 provided on the lower surface 40. The shaft portions 45A of the securing pieces 45 on the rear surface 41 protrude toward the rear of the vehicle. The rear cover portion 100 is attached to the engine body 30 by inserting the head portions 45B of the securing pieces 45 into the through-holes 97A of the coupling posts 103.

When the rear cover portion 100 is attached to the engine body 30 as shown in Fig. 3, the exhaust passage 50 is arranged in the slot 101A of the rear plate portion 101. The rear bent portion 102 is placed on and brought into contact with the upper wall portion 93 of the bottom cover portion 90. In a state in which the rear cover portion 100 is attached to the engine body 30 with the securing mechanism, a gap is created between the rear cover portion 100 and the engine body 30 by an amount corresponding to the coupling posts 103 and the shaft portions 45A of the securing pieces 45. When removing the rear cover portion 100 from the engine body 30, the rear cover portion 100 is pulled toward the rear of the vehicle to pull out the head portions 45B from the through-holes 97A, so that the securing pieces 45 and the coupling posts 103 are disengaged from each other.

As shown in Figs. 3 and 4, the cover 80 also has a right cover portion 110 located on the right side of the engine body 30 in the vehicle width direction. The right cover portion 110 includes a rectangular right plate portion 111 facing the right side surface 42A of the engine body 30, a lower right bent portion 112 extending leftward from the lower end of the right plate portion 111 in the vehicle width direction, and a right rear bent portion 113 extending leftward from the rear end of the right plate portion 111 in the vehicle width direction. The right plate portion 111 is larger than the right side surface 42A of the engine body 30, and the opposite end edges in the vehicle longitudinal direction of the right plate portion 111 are located outward of the right side surface 42A. Also, in the vehicle vertical direction, the upper edge of the right plate portion 111 is at the same position as the upper edge of the right side surface 42A. The length of the right plate portion 111 in the vehicle longitudinal direction is longer than the length of the bottom cover portion 90 in the vehicle longitudinal direction. The right plate portion 111, the lower right bent portion 112, and the right rear bent portion 113 are made of nonwoven fabric. Further, the right plate portion 111 has coupling posts 114.

The structure of the coupling posts 114 provided on the right cover portion 110 is the same as the structure of the coupling posts 94 provided on the bottom cover portion 90. The through-holes 97A of the coupling posts 114 on the right cover portion 110 face the right side surface 42A of the engine body 30. The engine body 30 further has securing pieces 45 (not shown) on the right side surface 42A. The securing pieces 45 are arranged at positions corresponding to the coupling posts 114 on the right cover portion 110. The structure of the securing pieces 45 provided on the right side surface 42A of the engine body 30 is the same as the structure of the securing pieces 45 provided on the lower surface 40. The shaft portions 45A of the securing pieces 45 on the right side surface 42A protrude rightward in the vehicle width direction. The right cover portion 110 is attached to the engine body 30 by inserting the head portions 45B of the securing pieces 45 into the through-holes 97A of the coupling posts 114.

As shown in Fig. 3, in a state in which the right cover portion 110 is attached to the engine body 30, the lower right bent portion 112 is placed on and brought into contact with the upper wall portion 93 of the bottom cover portion 90 and the right rear bent portion 113 is placed on and brought into contact with the front side of the rear plate portion 101 of the rear cover portion 100. Since the length of the right plate portion 111 in the vehicle longitudinal direction is longer than the length of the bottom cover portion 90 in the vehicle longitudinal direction, the right cover portion 110 extends further toward the front of the vehicle than the bottom cover portion 90. As a result, the right side surface 42A of the engine body 30 is covered by the right cover portion 110, and the right cover portion 110 is arranged on the right side in the vehicle width direction of the driven pulley 63, 66 of the alternator 60 and the compressor 65, which are coupled to the engine body 30. In a state in which the right cover portion 110 is attached to the engine body 30 with the securing mechanism, a gap is created between the right cover portion 110 and the engine body 30 by an amount corresponding to the coupling posts 114 and the shaft portions 45A of the securing pieces 45. When removing the right cover portion 110 from the engine body 30, the right cover portion 110 is pulled toward the rear of the vehicle to pull out the head portions 45B from the through-holes 97A, so that the securing pieces 45 and the coupling posts 114 are disengaged from each other.

As described above, the cover 80 covers the lower surface 40 of the engine body 30 with the bottom cover portion 90, covers the rear surface 41 of the engine body 30 with the rear cover portion 100, and covers the right side surface 42A of the engine body 30 with the right cover portion 110. On the other hand, the cover 80 does not cover the upper surface 43 or the front surface 44 of the engine body 30. Thus, the alternator 60 and the compressor 65, which are coupled to the front surface 44 of the engine body 30, are not covered by the cover 80. That is, each of the alternator 60 and the compressor 65 has a surface coupled to the engine body 30 and the front surface opposite to the surface coupled to the engine body 30, and the front surface does not face the inner surface of the cover 80 and is exposed when viewed from the front of the vehicle.

The present embodiment achieves the following advantages.
(1) The inventor has discovered that there is not much difference in the noise reduction effect transmitted from the engine body 30 to the outside of the vehicle during traveling of the vehicle between a case in which a cover is provided on the upper surface 43 and the front surface 44 of the engine body 30 of the engine 20 and a case in which such a cover is not provided. That is, since the engine body 30 of the vehicle is covered by the engine hood from above and the outer panels 15 from the front, noise is unlikely to leak out. On the other hand, only the rectangular frame-shaped suspension member 16 is arranged below the engine body 30, so that the lower part of the engine body 30 communicates with the outside of the vehicle. The wheel housings 13 are arranged on the outer sides in the vehicle width direction of the engine body 30. Since the wheel housings 13 are connected to the upper surfaces and the side surfaces of the side members 10, the engine compartment 17 communicates with the outside of the vehicle through below the wheel housings 13 arranged on the sides of the engine body 30. Also, the exhaust passage 50 is routed under the dash panel 12, and the rear of the engine body 30 also communicates with the outside of the vehicle.

In the present embodiment, the cover 80 covers the lower surface 40, the rear surface 41, and the right side surface 42A of the engine body 30, and the transmission case 70 covers the left side surface 42B of the engine body 30. That is, the lower surface 40, the rear surface 41, and the side surfaces 42 of the engine body 30 are covered by the cover 80 and the transmission case 70. As a result, either the cover 80 or the transmission case 70 is arranged on each of the main paths of the noise transmitted from the engine body 30 to the outside of the vehicle, so that the noise reduction effect equivalent to that of a structure covering the entire engine body 30 is achieved.

Since the alternator 60 and the compressor 65 are not attached to the cover 80 but are attached to the engine body 30, the cover 80 can be detached from the engine body 30 for maintenance of the engine body 30 without removing the auxiliary devices from the engine body 30. This eliminates the necessity for removal of the auxiliary devices at each maintenance event. The above-described configuration thus ensures the noise reduction effect while improving the maintainability.

(2) Each of the alternator 60 and the compressor 65 has a surface attached to the engine body 30 and the front surface opposite to the surface attached to the engine body 30, and the front surface does not face the inner surface of the cover 80 and is exposed when viewed from the front of the vehicle. Thus, when the vehicle travels, the relative wind introduced into the engine compartment 17 from the front of the vehicle is blown onto the alternator 60 and the compressor 65 without being blocked by the cover 80. This allows the relative wind to contribute to suppression of the temperature rise of the alternator 60 and the compressor 65.

(3) A gap is created between the cover 80 (the bottom cover portion 90, the rear cover portion 100, and the right cover portion 110) and the engine body 30. Thus, an air layer is formed between the cover 80 (the bottom cover portion 90, the rear cover portion 100, and the right cover portion 110) and the engine body 30, and this air layer absorbs the energy of the noise emitted from the engine body 30 through the damping effect. This further reduces the noise.

(4) The cover 80 is attached to the engine body 30 by securing the securing pieces 45 on the engine body 30 to the coupling posts 94, 103, 114 on the cover 80. Thus, attachment and detachment of the cover 80 are easier than those in the structure in which the cover 80 is attached to the engine body 30 via a fastening mechanism using, for example, bolts and nuts. Therefore, the structure of the above-described embodiment contributes to optimization of the configuration for further improving the maintainability.

(5) The rear cover portion 100 has the slot 101A. This permits the rear cover portion 100 to be attached to and detached from the rear surface 41 of the engine body 30 by sliding the rear cover portion 100 in the vehicle width direction while covering the rear surface 41 of the engine body 30 with the rear cover portion 100. That is, sliding the rear cover portion 100 leftward in the vehicle width direction with respect to the engine body 30 allows the rear cover portion 100 to be arranged to face the rear surface of the engine body 30 while arranging the exhaust passage 50 in the slot 101A through the opening of the slot 101A.

The above-illustrated embodiment may be modified as follows. The following modifications may be combined as necessary.

The structure of the rear cover portion 100 is not limited to the one described above. For example, in place of the slot 101A, the rear cover portion 100 may have a through-hole through which the exhaust passage passes. In this case, the rear cover portion 100 preferably has a cut connecting the peripheral edge of the through-hole and the peripheral edge of in the rear cover portion 100 to allow the exhaust passage 50 to be arranged inside the through-hole through the cut. In addition, for example, it is also possible to configure the rear cover portion 100 to be constituted by an upper piece and a lower piece divided at the slot 101A. In this case, the upper piece may be omitted. Further, unlike the above-described embodiment in which the slot 101A is cut out from the left end of the rear plate portion 101 of the rear cover portion 100, the slot 101A may have a shape cut out from the right end or a shape cut out from the upper end of the rear plate portion 101. The structure in which the slot 101A is cut out from the right end of the rear plate portion 101 permits the rear cover portion 100 to be attached to and detached from the rear surface 41 of the engine body 30 by sliding the rear cover portion 100 in the vehicle width direction as in the above-described embodiment. In addition, the structure in which a slot is cut out from the upper end of the rear plate portion 101 permits the rear cover portion 100 to be attached to and detached from the rear surface 41 of the engine body 30 by sliding the rear cover portion 100 in the vehicle vertical direction.

In the above-described embodiment, the engine body 30 has the securing pieces 45, and the cover 80 has the coupling posts 94, 103, 114, which serve as securing hole portions. However, the engine body 30 may have coupling posts, and the cover 80 may have securing pieces.

In the above-described embodiment, the engine body 30 has the securing mechanism for attaching the cover 80 to the engine body 30. However, in place of or in addition to such a securing mechanism, an attaching mechanism for attaching the cover 80 to the engine body 30 may be provided. As an attaching mechanism, it is possible to employ a fastening mechanism using, for example, bolts and nuts. When employing such a fastening mechanism, it only requires to weld nuts to the engine body 30 and fasten bolts inserted into the cover 80 to the nut, so that the cover 80 is attached to the engine body 30.

In the above-described embodiment, the rear bent portion 102 of the rear cover portion 100 and the lower right bent portion 112 of the right cover portion 110 are placed on and brought into contact with the upper wall portion 93 of the bottom cover portion 90. In such a configuration, the upper wall portion 93 may be brought into contact with and secured to the rear bent portion 102 and the lower right bent portion 112. Also, the bottom cover portion 90, the rear cover portion 100, and the right cover portion 110 may be spaced apart from each other without bringing the upper wall portion 93 into contact with the rear bent portion 102 and the lower right bent portion 112. In this case, the upper wall portion 93, the rear bent portion 102, and the lower right bent portion 112 may be omitted from the cover 80. Even with such a configuration, the noise of the engine body 30 can be reduced as compared with the configuration without the cover 80 and the noise reduction effect is ensured.

In the above-described embodiment, the right rear bent portion 113 of the right cover portion 110 is placed on and brought into contact with the rear plate portion 101 of the rear cover portion 100. In such a configuration, the rear plate portion 101 and the right rear bent portion 113 may be secured to each other while being brought into contact with each other. In addition, the rear cover portion 100 and the right cover portion 110 may be separated from each other without bringing the rear plate portion 101 and the right rear bent portion 113 into contact with each other. In this case, it is also possible to omit the right rear bent portion 113 in the right cover portion 110. Even with such a configuration, the noise of the engine body 30 can be reduced as compared with the configuration without the cover 80 and the noise reduction effect is ensured.

The positions and numbers of coupling posts 94, 103, and 114 on the cover 80 can be changed as necessary.

It is not necessary to attach all of the bottom cover portion 90, the rear cover portion 100, and the right cover portion 110 of the cover 80 to the engine body 30. For example, the bottom cover portion 90 may be attached to the engine body 30, and the rear cover portion 100 and the right cover portion 110 may be coupled to and supported by the bottom cover portion 90.

It is not necessary to create a gap between the cover 80 and the engine body 30. For example, the bottom cover part 90 may be constituted only by the bottom plate portion 91, and the bottom plate portion 91 may be bonded to the lower surface 40 of the engine body 30. In this case, it only requires that the bottom cover portion 90 be made of heat-resistant nonwoven fabric. Further, it is not necessary to create a gap between the rear cover portion 100 and the engine body 30, and it is not necessary to create a gap between the right cover portion 110 and the engine body 30.

In the above-described embodiment, a cover may be arranged on the left side surface 42B of the engine body 30. That is, an upper left cover that is connected to the upper wall 71 of the transmission case 70 and extends upward and a lower left cover that is connected to the lower wall 72 of the transmission case 70 and extends downward may be provided. The lower left cover may be connected to the bottom cover portion 90 and the rear cover portion 100. According to such a configuration, the upper left cover and the lower left cover also cover the left side of the cylinder head 34 and the cylinder head cover 35 of the engine body 30 and the left side of the oil pan 33. This improves the effect of reducing the noise transmitted from the left side surface 42B of the engine body 30 to the outside of the vehicle.

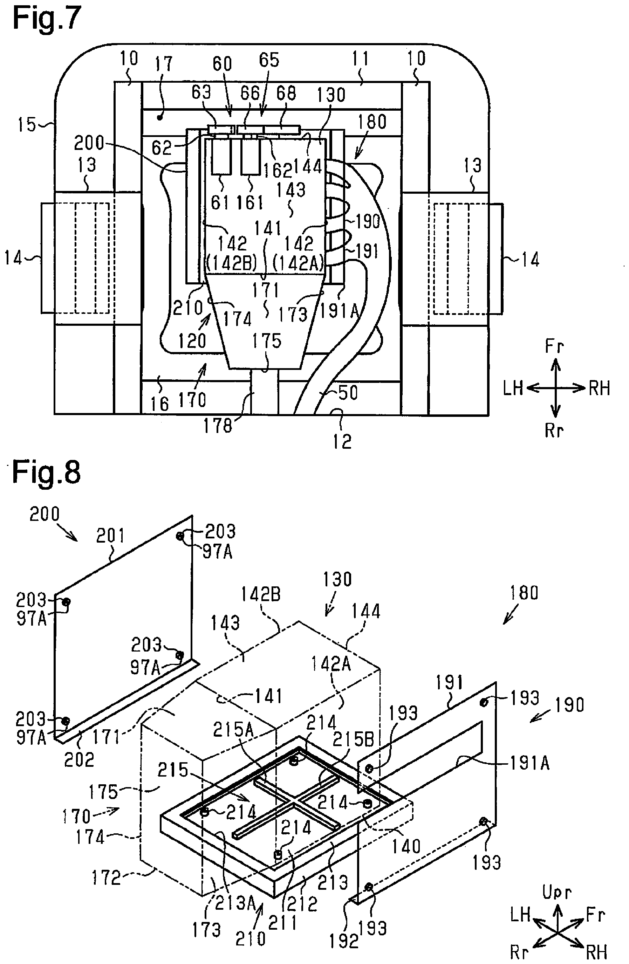

The above-described embodiment illustrates as an example the engine 20 mounted on an FF vehicle, which drives the front wheels by the engine 20 arranged in the front part of the vehicle. As shown in Figs. 7 and 8, even an engine 20 mounted on an FR vehicle, which drives the rear wheels by the engine 20 arranged in the front part of the vehicle, may employ the same structure as the one described above. In the configuration shown in Figs. 7 and 8, the same reference numerals are given to those components that the same as the corresponding components of the above-described embodiment and detailed description thereof is omitted.

As shown in Fig. 7, an exhaust passage 50 is coupled to the right side surface 142A of the engine body 130 of an internal combustion engine 120. The exhaust passage 50 branches toward the engine body 130. The exhaust passage 50 extends toward the rear of the vehicle from the engine body 130. The exhaust passage 50 passes above the suspension member 16 and is routed under the dash panel 12 to extend to the rear part of the vehicle.

An alternator 60 and an air conditioner compressor 65 are attached to the upper surface 143 of the engine body 130. The alternator 60 has a main body 61 fixed to the left side in the vehicle width direction of the upper surface 143 of the engine body 130, a rotary shaft 62 extending toward the front of the vehicle from the main body 61, and a driven pulley 63 coupled to the distal end of the rotary shaft 62. The compressor 65 has a main body 161, which is arranged on the right side in the vehicle width direction of the alternator 60 and fixed to the upper surface 143 of the engine body 130, a rotary shaft 162 extending toward the front of the vehicle from the main body 161, and a driven pulley 66 coupled to the distal end of the rotary shaft 162. A crankshaft pulley 68 connected to the first end of the crankshaft is arranged on the front surface 144 of the engine body 130. A timing belt (not shown) is looped over the driven pulleys 63, 66 and the crankshaft pulley 68. Thus, when the crankshaft pulley 68 rotates integrally with the crankshaft, the driven pulleys 63, 66 rotate, accordingly. In this manner, the alternator 60 and the compressor 65 are drivingly coupled to engine body 30.

As shown in Figs. 7 and 8, a transmission case 170 is coupled to the rear surface 141 of the engine body 130. The transmission case 170 includes an upper wall 171 and a lower wall 172, which respectively face upward and downward in the vehicle vertical direction, a right wall 173 and a left wall 174, which face away from each other in the vehicle width direction, and a rear wall 175, which faces the rear of the vehicle. The front ends of the upper wall 171, the lower wall 172, the right wall 173, and the left wall 174 of the transmission case 170 are respectively coupled to the periphery of the rear surface 141 of the engine body 130. That is, the size of the front end of the transmission case 170 is the same as the size of the rear surface 141 of the engine body 130. Thus, the rear surface 141 of the engine body 130 is covered by the transmission case 170. The right wall 173 and the left wall 174 of the transmission case 170 approach each other toward the rear of the vehicle. Thus, the upper wall 171 and the lower wall 172 of the transmission case 170 each have a trapezoidal shape in a plan view as shown in Fig. 7. The transmission case 170 incorporates a transmission. The crankshaft extends through the rear surface 141 of the engine body 130 into the transmission case 170 and is coupled to the transmission. That is, the second end of the crankshaft is connected to the transmission. The front end of a propeller shaft 178, which extends in the vehicle longitudinal direction, is inserted into the transmission case 170. The propeller shaft 178 extends to the rear part of the vehicle through below the dash panel 12 and drives the rear wheels (not shown) of the vehicle. Rotation of the crankshaft is transmitted to the propeller shaft 178 via the transmission, and the propeller shaft 178 drives the rear wheels, so that the vehicle travels.

As shown in Fig. 8, the cover 180 of the engine 20 includes a bottom cover portion 210 covering the lower surface 140 of the engine body 130, a right cover portion 190 covering the right side surface 142A of the engine body 130, and a left cover portion 200 covering the left side surface 142B of the engine body 130.

The bottom cover portion 210 includes a rectangular bottom plate portion 211 facing the lower surface 140 of the engine body 130, an upstanding wall portion 212 upstanding from the peripheral edge of the bottom plate portion 211, and an upper wall portion 213 extending a predetermined length inward from the upper end of the upstanding wall portion 212. The bottom plate portion 211 is larger than the lower surface 140 of the engine body 130 and its entire periphery is arranged outside the lower surface 140. The upstanding wall portion 212 is arranged over the entire periphery of the bottom plate portion 211. The upper wall portion 213 extends parallel with the bottom plate portion 211. The bottom cover portion 210 has an opening 213A defined by the periphery of the upper wall portion 213. The opening 213A faces upward and its size is larger than the lower surface 140 of the engine body 130. The bottom plate portion 211 is provided with a plurality of coupling posts 214 extending upward. The coupling posts 214 are provided in the inner region of the opening 213A in a plan view of the bottom plate portion 211. The structure of the coupling posts 214 is the same as that of the coupling posts 94 described in the above-described embodiment.

The bottom plate portion 211 also has an upward protrusion 215. The protrusion 215 is composed of a first protrusion 215A extending in the vehicle width direction and a second protrusion 215B extending in the vehicle longitudinal direction. The first protrusion 215A and the second protrusion 215B extend to cross each other at their central parts. The protruding height of the protrusion 215 from the bottom plate portion 211 is the same as the protruding height of the coupling posts 214 from the bottom plate portion 211 and the height of the upper surface of the upper wall portion 213. The protrusion 215 is made of an elastic material such as rubber.

The engine body 130 has securing pieces (not shown) on the lower surface 140. The securing pieces are arranged at positions corresponding to the coupling posts 214 on the bottom cover portion 210. The structure of the securing pieces provided on the lower surface 140 of the engine body 130 is the same as that of the securing pieces 45 described in the above-described embodiment. The shaft portions of the securing pieces on the lower surface 140 protrude downward. The bottom cover portion 210 is attached to the engine body 130 by inserting the head portions of the securing pieces into the through-holes 97A of the coupling posts 214.

With the bottom cover portion 210 attached to the engine body 130 with the securing mechanism, the lower surface 140 of the engine body 130 is in contact with the upper surfaces of the protrusion 215 and the coupling posts 214, so that the engine body 130 is supported by the protrusion 215 and the coupling posts 214. Also, the lower wall 172 of the transmission case 170 contacts the upper wall portion 213. A gap is created between the engine body 130 and the bottom cover portion 210 by an amount corresponding to the projecting height of the protrusion 215. When removing the bottom cover portion 210 from the engine body 130, the bottom cover portion 210 is pulled downward to pull out the head portions of the securing pieces from the coupling posts 214, so that the securing pieces and the coupling posts 214 are disengaged from each other.

The right cover portion 190 includes a rectangular right plate portion 191 facing the right side surface 142A of the engine body 130 and a right bent portion 192 extending leftward in the vehicle width direction from the lower end of the right plate portion 191. The right plate portion 191 is larger than the right side surface 142A of the engine body 130, and the opposite end edges in the vehicle longitudinal direction of the right plate portion 111 are located outward of the right side surface 142A. Also, in the vehicle vertical direction, the upper edge of the right plate portion 191 is at the same position as the upper edge of the right side surface 142A. The right plate portion 191 has a slot 191A, which has a shape cut out from the rear end toward the front end. The slot 191A is formed in a rectangular shape having the longitudinal direction coinciding with the vehicle longitudinal direction. The right plate portion 191 and the right bent portion 192 are made of nonwoven fabric. Further, the right plate portion 191 has coupling posts 193. The structure of the coupling posts 193 provided on the right cover portion 190 is the same as that of the coupling posts 114 described in the above-described embodiment. Also, the engine body 130 has securing pieces (not shown) on the right side surface 142A. The securing pieces are arranged at positions corresponding to the coupling posts 193 on the right cover portion 190. The structure of the securing pieces provided on the right side surface 142A of the engine body 130 is the same as that of the securing pieces 45 described in the above-described embodiment. The shaft portions of the securing pieces on the right side surface 142A protrude rightward in the vehicle width direction. The right cover portion 190 is attached to the engine body 130 by inserting the head portions of the securing pieces into the through-holes 97A of the coupling posts 193.

As shown in Fig. 7, in a state in which the right cover portion 190 is attached to the engine body 130, the exhaust passage 50 is arranged in the slot 191A of the right plate portion 191. The right bent portion 192 is placed on and brought into contact with the upper wall portion 93 of the bottom cover portion 90. In a state in which the right cover portion 190 is attached to the engine body 130 by the securing mechanism, which is constituted by the coupling posts 193 and the securing pieces, a gap is created between the right cover portion 190 and the engine body 130 by an amount corresponding to the coupling posts 193 and the shaft portions of the securing pieces. When removing the right cover portion 190 from the engine body 130, the right cover portion 190 is pulled rightward in the vehicle width direction to pull out the head portions of the securing pieces from the through-holes 97A of the coupling posts 193, so that the securing pieces and the coupling posts 193 are disengaged from each other.

As shown in Fig. 8, the left cover portion 200 includes a rectangular left plate portion 201 facing the left side surface 142B of the engine body 130 and a left bent portion 202 extending rightward in the vehicle width direction from the lower end of the left plate portion 201. The left plate portion 201 is larger than the left side surface 142B of the engine body 130, and the opposite end edges in the vehicle longitudinal direction are located outward of the left side surface 142B. Also, in the vehicle vertical direction, the upper edge of the left plate portion 201 is at the same position as the upper edge of the left side surface 142B. The left plate portion 201 and the left bent portion 202 are made of nonwoven fabric. Further, the left plate portion 201 has coupling posts 203. The structure of the coupling posts 203 provided on the left cover portion 200 is the same as that of the coupling posts 94 described in the above-described embodiment. The through-holes 97A of the coupling posts 203 on the left cover portion 200 face the left side surface 142B of the engine body 130. Also, the engine body 130 has securing pieces (not shown) on the left side surface 142B. The securing pieces are arranged at positions corresponding to the coupling posts 203 on the left cover portion 200. The structure of the securing pieces provided on the left side surface 142B of the engine body 130 is the same as that of the securing pieces 45 described in the above-described embodiment. The shaft portions of the securing pieces on the left side surface 142B protrude leftward in the vehicle width direction. The left cover portion 200 is attached to the engine body 130 by inserting the head portions of the securing pieces into the through-holes 97A of the coupling posts 203.

In a state in which the left cover portion 200 is attached to the engine body 130, the left bent portion 202 is placed on and brought into contact with the upper wall portion 93 of the bottom cover portion 90. In a state in which the left cover portion 200 is attached to the engine body 130 by a securing mechanism, which is constituted by the coupling posts 203 and the securing pieces, a gap is created between the left cover portion 200 and the engine body 130 as shown in Fig. 7 by an amount corresponding to the coupling posts 203 and the shaft portions of the securing pieces. When removing the left cover portion 200 from the engine body 130, the left cover portion 200 is pulled leftward in the vehicle width direction to pull out the head portions of the securing pieces from the through-holes 97A of the coupling posts 203, so that the securing pieces and the coupling posts 203 are disengaged from each other.

In the configuration shown in Figs. 7 and 8, the cover 180 covers the lower surface 140, the right side surface 142A, and the left side surface 142B of the engine body 130. The transmission case 170 covers the rear surface 141 of the engine body 130. On the other hand, the upper surface 143 and the front surface 144 of the engine body 130 are not covered by the cover 180 or the transmission case 170. Thus, the alternator 60 and the compressor 65, which are coupled to the upper surface 143 of the engine body 130, are not covered by the cover 180. The upper surfaces of the alternator 60 and the compressor 65, which are on the opposite side to the engine body 130, do not face the inner surface of the cover 180 and are exposed when viewed from above the vehicle.

Even with this configuration, the cover 180 and the transmission case 170 cover the lower surface 140, the rear surface 141, and the two side surfaces 142 of the engine body 130. The alternator 60 and the compressor 65 are not attached to the cover 180 but are attached to the engine body 130. Thus, when removing the cover 180 for maintenance of the engine body 130, the auxiliary devices can remain attached to the engine body 130. Also, when the vehicle travels, the relative wind introduced into the engine compartment 17 from the front of the vehicle is blown onto the alternator 60 and the compressor 65 without being blocked by the cover 180. Therefore, the same advantages as the above items (1) and (2) are achieved.

Although the alternator 60 and the air conditioner compressor are illustrated as auxiliary devices, other structures can be employed as auxiliary devices. For example, a starter or the like that rotates the crankshaft to start the engine body 30, 130 may be employed as an auxiliary device.

The surface to which auxiliary devices are attached may be at least one of the upper surface 43, 143 and the front surface 44, 144 of the engine body 30, 130. For example, in the above-described embodiment, the alternator 60 may be attached to the upper surface 43, and the compressor 65 may be attached to the front surface 44. Alternatively, both the alternator 60 and the compressor 65 may be attached to front surface 44. Even in such a case, the alternator 60 and the compressor 65 only need to be drivingly coupled to the engine body 30.

The transmission case 70, 170 may be coupled to one of the upper surface 43, 143 and the front surface 44, 144 of the engine body 30, 130 instead of the side surface or the rear surface of the engine body 30, 130. In this case, the cover 80, 180 only needs to cover at least all of the lower surface 40, 140, the rear surface 41, 141, and the side surfaces 42, 142 of the engine body 30, 130.

Although the parts of the cover 80, 180 other than the coupling posts 94, 103, 114, 193, 203 and the protrusion 98, 215 are made of nonwoven fabric, these parts may be made of a material other than nonwoven fabric. As a material other than nonwoven fabric, it is possible to use a foamed plastic such as a urethane resin.

Although the cover 80, 180 is constituted by separate cover portions, the cover 80, 180 may be constituted as a one-piece member, which does not include separate cover portions as long as the cover 80, 180 can be attached to and detached from an engine body. Also, when the cover 80, 180 is constituted by separate cover portions, it is possible to appropriately change the number of cover portions from the viewpoint of manufacture and design.

## Claims

1. A vehicle comprising:
an engine compartment (17);
an engine hood;
an internal combustion engine (20; 120) arranged inside the engine compartment (17), covered under the engine hood, and comprising:
an engine body (30; 130) having a lower surface (40; 140), a rear surface (41; 141), and two side surfaces (42; 142), wherein the lower surface (40; 140) faces downward of the vehicle, the rear surface (41; 141) faces a rear of the vehicle, and the side surfaces (42; 142) face away from each other in a vehicle width direction;
a transmission case (70; 170), which is coupled to the engine body (30; 130) and accommodates a transmission;
a cover (80; 180), which covers the engine body (30; 130) so that each of the lower surface (40; 140), the rear surface (41; 141), and the side surfaces (42; 142) is covered by the cover (80; 180) or the transmission case (70; 170); and
an auxiliary device (60, 65), which is attached to and drivingly coupled to the engine body (30; 130),
wherein the auxiliary device (60, 65) has an opposite surface located on a side opposite to the engine body (30; 130), and the opposite surface of the auxiliary device (60, 65) does not face the cover (80; 180),
the vehicle being **characterized in that**
the transmission case (70; 170) and the cover (80; 180) do not cover a front surface (44; 144) and an upper surface (43; 143) of the engine body (30;
130), and the auxiliary device (60, 65) is attached to the front surface (44; 144) or the upper surface (43; 143) of the engine body (30; 130).

2. The vehicle according to claim 1, wherein a gap is created between the cover (80; 180) and the engine body (30; 130).

3. The vehicle according to claim 1 or 2, further comprising a securing mechanism, which includes
a securing piece (45), which is provided on one of the cover (80; 180) and the engine body (30; 130), and
a securing hole portion (94), which is provided on the other one of the cover (80; 180) and the engine body (30; 130), the securing piece (45) being configured to be inserted into the securing hole portion (94),
wherein the cover (80; 180) is attached to the engine body (30; 130) by inserting the securing piece (45) into the securing hole portion (94) so that the securing piece (45) is secured to the securing hole portion (94).

4. The vehicle according to any one of claims 1 to 3, wherein
the transmission case (70) is coupled to one of the two side surfaces (42),
the cover (80) covers the lower surface (40), the rear surface (41), and the other one of the side surfaces (42).

5. The vehicle according to any one of claims 1 to 3, wherein
the transmission case (170) is coupled to the rear surface (141),
the cover (180) covers the lower surface (140) and the two side surfaces (142).

## Patentansprüche

1. Fahrzeug, umfassend:
einen Motorraum (17),
eine Motorhaube,
einen Verbrennungsmotor (20; 120), der innerhalb des Motorraums (17) angeordnet und unter der Motorhaube abgedeckt ist, und umfassend:
einen Motorkörper (30; 130) mit einer unteren Oberfläche (40; 140), einer hinteren Oberfläche (41; 141), und zwei seitlichen Oberflächen (42; 142), wobei die untere Oberfläche (40; 140) von dem Fahrzeug nach unten weist, die hintere Oberfläche (41; 141) zu einer Rückseite des Fahrzeugs weist, und die seitlichen Oberflächen (42; 142) in einer Fahrzeugbreitenrichtung voneinander weg weisen,
ein Getriebegehäuse (70; 170), das mit dem Motorkörper (30; 130) gekoppelt ist und ein Getriebe aufnimmt,
eine Abdeckung (80; 180), die den Motorkörper (30; 130) abdeckt, so dass jede von der unteren Oberfläche (40; 140), der hinteren Oberfläche (41; 141) und den seitlichen Oberflächen (42; 142) von der Abdeckung (80; 180) oder dem Getriebegehäuse (70; 170) abgedeckt wird, und
eine Zusatzvorrichtung (60, 65), die an dem Motorkörper (30; 130) angebracht und zum Antrieb damit gekoppelt ist,
wobei die Zusatzvorrichtung (60, 65) eine gegenüberliegende Oberfläche aufweist, die sich an einer dem Motorkörper (30; 130) gegenüberliegenden Seite befindet, und die gegenüberliegende Oberfläche der Zusatzvorrichtung (60, 65) nicht zu der Abdeckung (80; 180) weist,
wobei das Fahrzeug **dadurch gekennzeichnet ist, dass**
das Getriebegehäuse (70; 170) und die Abdeckung (80; 180) eine vordere Oberfläche (44; 144) und eine obere Oberfläche (43; 143) des Motorkörpers (30; 130) nicht abdecken, und die Zusatzvorrichtung (60, 65) an der vorderen Oberfläche (44; 144) oder der oberen Oberfläche (43; 143) des Motorkörpers (30; 130) angebracht ist.

2. Fahrzeug nach Anspruch 1, wobei ein Spalt zwischen der Abdeckung (80; 180) und dem Motorkörper (30; 130) gebildet ist.

3. Fahrzeug nach Anspruch 1 oder 2, ferner umfassend einen Sicherungsmechanismus, der beinhaltet
ein Sicherungsteil (45), das an einer/einem von der Abdeckung (80; 180) und dem Motorkörper (30; 130) vorgesehen ist, und
einen Sicherungslochabschnitt (94), der an der/dem jeweils anderen von der Abdeckung (80; 180) und dem Motorkörper (30; 130) vorgesehen ist, wobei das Sicherungsteil (45) dazu ausgestaltet ist, in den Sicherungslochabschnitt (94) eingeführt zu werden,
wobei die Abdeckung (80; 180) an dem Motorkörper (30; 130) befestigt wird, indem das Sicherungsteil (45) in den Sicherungslochabschnitt (94) eingeführt wird, so dass das Sicherungsteil (45) in dem Sicherungslochabschnitt (94) gesichert ist.

4. Fahrzeug nach einem der Ansprüche 1 bis 3, wobei
das Getriebegehäuse (70) mit einer der zwei seitlichen Oberflächen (42) gekoppelt ist,
die Abdeckung (80) die untere Oberfläche (40), die hintere Oberfläche (41) und die andere der seitlichen Oberflächen (42) abdeckt.

5. Fahrzeug nach einem der Ansprüche 1 bis 3, wobei
das Getriebegehäuse (170) mit der hinteren Oberfläche (141) gekoppelt ist,
die Abdeckung (180) die untere Oberfläche (140) und die zwei seitlichen Oberflächen (142) abdeckt.

## Revendications

1. Véhicule comprenant :
un compartiment moteur (17) ;
un capot moteur ;
un moteur à combustion interne (20 ; 120) disposé à l'intérieur du compartiment moteur (17), couvert sous le capot moteur, et comprenant :
un corps de moteur (30 ; 130) ayant une surface inférieure (40 ; 140), une surface arrière (41 ; 141), et deux surfaces latérales (42 ; 142), la surface inférieure (40 ; 140) étant orientée vers le bas du véhicule, la surface arrière (41 ; 141) étant orientée vers l'arrière du véhicule, et les surfaces latérales (42 ; 142) orientées en sens opposés l'une de l'autre dans une direction de largeur de véhicule ;
un carter de transmission (70 ; 170), qui est relié au corps de moteur (30 ; 130) et reçoit une transmission ;
un couvercle (80 ; 180), qui recouvre le corps de moteur (30 ; 130) de telle sorte que chacune de la surface inférieure (40 ; 140), de la surface arrière (41 ; 141), et des surfaces latérales (42 ; 142) est couverte par le couvercle (80 ; 180) ou le carter de transmission (70 ; 170) ; et
un dispositif auxiliaire (60, 65), qui est fixé sur et relié pour entraînement au corps de moteur (30 ; 130) ,
le dispositif auxiliaire (60, 65) ayant une surface opposée qui se trouve sur un côté opposé au corps de moteur (30 ; 130), et la surface opposée du dispositif auxiliaire (60, 65) ne fait pas face au couvercle(80 ; 180),
le véhicule étant **caractérisé en ce que**
le carter de transmission (70 ; 170) et le couvercle (80 ; 180) ne couvrent pas une surface avant (44 ; 144) et une surface supérieure (43 ; 143) du corps de moteur (30 ; 130), et le dispositif auxiliaire (60, 65) est fixé sur la surface avant (44 ; 144) ou la surface supérieure (43 ; 143) du corps de moteur (30 ; 130).

2. Véhicule selon la revendication 1, dans lequel un espace est créé entre le couvercle (80 ; 180) et le corps de moteur (30 ; 130).

3. Véhicule selon la revendication 1 ou 2, comprenant en outre un mécanisme de fixation, qui comprend
une pièce de fixation (45), qui est prévue sur l'un de l'élément de recouvrement (80 ; 180) et du corps de moteur (30 ; 130), et
une partie de trou de fixation (94), qui est prévue sur l'autre de l'élément de recouvrement (80 ; 180) et du corps de moteur (30 ; 130), la pièce de fixation (45) étant configurée pour être insérée dans la partie de trou de fixation (94),
le couvercle (80 ; 180) étant fixé sur le corps de moteur (30 ; 130) en insérant la pièce de fixation (45) dans la partie de trou de fixation (94) de telle sorte que la pièce de fixation (45) est fixée à la partie de trou de fixation (94).

4. Véhicule selon l'une quelconque des revendications 1 à 3, dans lequel
le carter de transmission (70) est relié à l'une des deux surfaces latérales (42),
le couvercle (80) recouvre la surface inférieure (40), la surface arrière (41), et l'autre des surfaces latérales (42).

5. Véhicule selon l'une quelconque des revendications 1 à 3, dans lequel
le carter de transmission (170) est relié à la surface arrière (141),
le couvercle (180) couvre la surface inférieure (140) et les deux surfaces latérales (142).
